# EUROPEAN PATENT SPECIFICATION

(11) **EP 1 918 751 B1**
(45) Date of publication and mention of the grant of the patent: **20.01.2010**
(21) Application number: 06022728.7
(22) Date of filing: 31.10.2006
(51) Int. Cl.: G02B 21/00, G02B 21/36

(54) **Microscope system, observation method and observation program**
Mikroskopsystem, Beobachtungsverfahren und Beobachtungsprogramm
Système de microscope, procédé d'observation et programme d'observation

(43) Date of publication of application: 07.05.2008
(73) Proprietor: Olympus Corporation, Tokyo 151-0072 (JP)
(72) Inventor: Yamada, Tatsuki, Hachioji-shi Tokyo 193-0933 (JP)
(74) Representative: von Hellfeld, Axel

(56) References cited:
- EP-A- 1 617 377
- EP-A1- 0 994 433
- WO-A-01/27678
- WO-A-98/39728
- US-A1- 2005 190 437
- US-A1- 2006 204 072

## Description

### Background of the Invention

### Field of the Invention

The present invention relates to a microscope system for recording and observing a wide vision and high definition digital image of the entirety, or a part of, a sample by using a microscope, an observation method used by a microscope system and an observation program therefor.

### Description of the Related Art

Conventionally, an observable range at once is mainly determined by a magnification of an object lens in the case of observing a sample by using a microscope. Larger the magnification, higher the definition of an image on one hand, narrower the observation range on the other. Accordingly being performed is to photograph a plurality of images by moving the vision by using a motorized stage, et cetera, and adhere or combine them together, thereby making a wide vision and high definition microscope image for utilizing in a pathological diagnosis (e.g., refer to Laid-Open Japanese Patent Application Publication Nos. 09-281405, 2003-295063; Japanese Translation of PCT International Application Nos. 2001-519944, 2002-514319, 2004-514920).

Furthermore, similar methods are performed for obtaining a three-dimensional wide vision and high definition microscope image having different focus positions (e.g., refer to Laid-Open Japanese Patent Application Publication Nos. 2004-151263, 2005-37902).

The purpose of the present invention is to provide a microscope system capable of constructing a wide vision and high definition (including a slice image having different focus positions) microscope image without requiring a work by an expert such as a pathologist, of reducing a storage capacity for recording and storing after a pathologist observing and/or determining a diagnosis, and of forming and displaying a wide vision and high definition microscope image; and an observation method and observation program for use in the microscope system.

International Patent Application Publication No. WO 98/39728 describes a method and apparatus for creating a virtual microscope slide using a computer-controlled microscope to capture a plurality of low-magnification images, which are tiled to create a reconstructed macro image.

### Summary of the Invention

The present invention provides a microscope system as defined in claim 1. The invention also provides an observation method carried out by a microscope system as defined in claim 3, as well as an observation program product to be executed by a microscope system as defined in claim 4.

That is, a microscope system according to an aspect of the present invention comprises image information obtainment means for obtaining image information of the entirety, or a part, of a sample by moving an object lens and a sample relatively to each other in the perpendicular direction against an optical axis; specific zone designation means for designating a specific zone of the image information obtained by the image information obtainment means; specific zone image storage means for storing image information of the specific zone designated by the specific zone designation means; image information reduction means for reducing an information volume of image information being not designated by the specific zone designation means among the image information obtained by the image information obtainment means; reduction image storage means for storing the image information reduced by the image information reduction means; and image position relationship storage means for storing a positional relationship between the image information stored by the specific zone image storage means and the image information stored by the reduction image storage means.

### Brief Description of the Drawings

The present invention will be more apparent from the following detailed description when the accompanying drawings are referenced.
Fig. 1 is a diagram showing an overall comprisal of a microscope system according to a first embodiment;
Fig. 2 is a flow chart showing an image input process flow;
Fig. 3 is a diagram showing a sample placed on a slide glass;
Fig. 4 is a diagram exemplifying a sampling part for acquiring a focusing position of an entire sample;
Fig. 5 is a diagram showing a coordinate map for obtaining a microscope image;
Fig. 6 is a flow chart for constructing a wide vision and high definition microscope image attached with a notable part;
Fig. 7 is a diagram showing an operation screen for constructing a wide vision and high definition microscope image attached with a notable part;
Fig. 8 is a diagram showing a first example of a file structure of a wide vision and high definition microscope image attached with a notable part;
Fig. 9 is a diagram showing a second example of a file structure of a wide vision and high definition microscope image attached with a notable part;
Fig. 10 is a flow chart showing an operation for observing a wide vision and high definition microscope image attached with a notable part;
Fig. 11 is a diagram showing an observation screen of a wide vision and high definition microscope image attached with a notable part;
Fig. 12 is a diagram showing a manner of compounding a wide vision and high definition microscope image having different focus points;
Fig. 13 is a diagram showing operation buttons for displaying different focus points; and
Fig. 14 is a diagram exemplifying file structures of a multiple focus-point, wide vision and high definition microscope image attached with a notable part.

### Description of the Preferred Embodiments

The following is a description of the preferred embodiment of the present invention by referring to the accompanying drawings.

That is, a microscope system according to an aspect of the present invention comprises image information obtainment means for obtaining image information of the entirety, or a part, of a sample by moving an object lens and a sample relatively to each other in the perpendicular direction against an optical axis; specific zone designation means for designating a specific zone of the image information obtained by the image information obtainment means; specific zone image storage means for storing image information of the specific zone designated by the specific zone designation means; image information reduction means for reducing an information volume of image information being not designated by the specific zone designation means among the image information obtained by the image information obtainment means; reduction image storage means for storing the image information reduced by the image information reduction means; and image position relationship storage means for storing a positional relationship between the image information stored by the specific zone image storage means and the image information stored by the reduction image storage means.

This configuration makes it possible to construct a wide vision and high definition microscope image by an operation of a general operator instead of a pathology expert, and construct a wide vision and high definition microscope image reducing a storage capacity while maintaining an appropriate amount of necessary image information by recording only an important part for a diagnosis in a high definition while reducing an information volume, such as resolution, for the entirety of an image of a sample (noted as a "sample image" hereinafter).

Meanwhile, a microscope system according to the present invention preferably comprises entire zone image display means for displaying, in a discretionary magnification, the entirety of a sample image constituted by the image information stored by the specific zone image storage means and constituted by the image information stored by the reduction image storage means; specific zone image display means for displaying the image information stored by the specific zone image storage means in a discretionary magnification; specific zone display means for displaying image information designated by the specific zone designation means among the image displayed by the specific zone image display means; sample entirety navigation means for displaying, in a rectangle, a zone of the image information displayed by the specific zone image display means within the entire sample image displayed by the entire zone image display means; and specific zone navigation means for displaying a zone indicating the image information displayed by the specific zone image display means within the image information displayed by the specific zone image display means.

This configuration makes it possible to observe figures of a series of microscope images ranging from an entire sample image to a strong magnification image while grasping a positional relationship of the present observation part.

Also, a microscope system according to the present invention is preferably configured so that the image information obtainment means is capable of moving an object lens and a sample relatively to each other in the perpendicular direction against the optical axis and in the optical axis direction, thereby obtaining three-dimensional image information of the entirety of the sample or a part thereof.

This configuration enables a response to a three-dimensional wide vision and high definition image with different focus positions and a figure observation of a necessary part in a strong magnification and various focus positions.

Also, according to an aspect of the present invention, an observation method which is one carried out by a microscope system comprises: obtaining image information of the entirety, or a part, of a sample by moving an object lens and a sample relatively to each other in the perpendicular direction against an optical axis; designating a specific zone of the obtained image information; storing image information of the designated specific zone in a specific zone image database; reducing an information volume of image information not designated among the obtained image information; storing the reduced image information in a reduction image database; storing a positional relationship between image information stored in the specific zone image database and one stored in the reduction image database; displaying, in a discretionary magnification, the entirety of a sample image constituted by image information stored in the specific zone image database and one stored in the reduction image database; displaying, in a discretionary magnification, image information stored in the specific zone image database; displaying the designated image information among the displayed image information; displaying, in a rectangle, a zone indicating image information of the displayed specific zone within the entirety of the displayed sample image; and displaying, in a rectangle, a zone indicating image information of the displayed specific zone within the image information of the displayed specific zone.

This configuration makes it possible to construct a wide vision and high definition microscope image by an operation of a general operator instead of a pathology expert, and construct a wide vision and high definition microscope image reducing a storage capacity while maintaining an appropriate amount of necessary image information by recording only an important part for a diagnosis in a high definition while reducing an information volume, such as resolution, for the entirety of a sample image. This also makes it possible to observe figures of a series of microscope images ranging from an entire sample image to a strong magnification image while grasping a positional relationship of the presently observing part.

Also, according to an aspect of the present invention, an observation program which is one to be executed by a microscope system comprises the procedures of: obtaining image information of the entirety, or a part, of a sample by moving an object lens and a sample relatively to each other in the perpendicular direction against an optical axis; designating a specific zone of the obtained image information; storing image information of the designated specific zone in a specific zone image database; reducing an information volume of image information not designated among the obtained image information; storing the reduced image information in a reduction image database; storing a positional relationship between image information stored in the specific zone image database and one stored in the reduction image database; displaying, in a discretionary magnification, the entirety of a sample image constituted by image information stored in the specific zone image database and one stored in the reduction image database; displaying, in a discretionary magnification, image information stored in the specific zone image database; displaying the designated image information among the displayed image information; displaying, in a rectangle, a zone indicating image information of the displayed specific zone within the entirety of the displayed sample image; and displaying, in a rectangle, a zone indicating image information of the displayed specific zone within the image information of the displayed specific zone.

This configuration makes it possible to construct a wide vision and high definition microscope image by an operation of a general operator instead of a pathology expert, and construct a wide vision and high definition microscope image reducing a storage capacity while maintaining an appropriate amount of necessary image information by recording only an important part for a diagnosis in a high definition while reducing an information volume, such as resolution, for the entirety of a sample image. This also makes it possible to observe figures of a series of microscope images ranging from an entire sample image to a strong magnification image while grasping a positional relationship of the presently observing part.

The first is a description on a first embodiment.

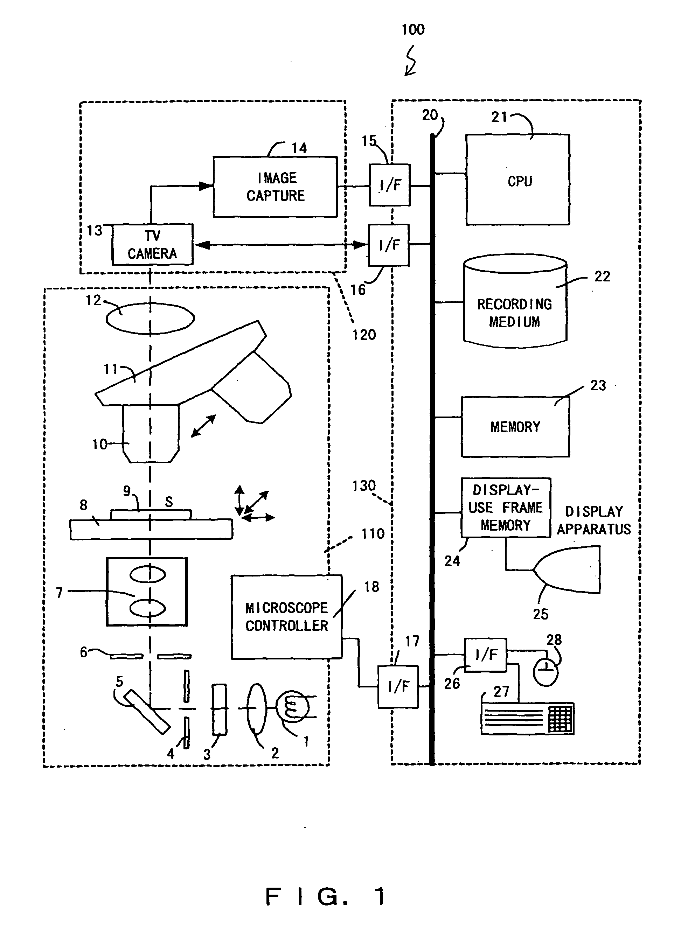

Fig. 1 is a diagram showing an overall comprisal of a microscope system according to the first embodiment.

The microscope system 100 comprises a microscope unit 110, an image input unit 120 and a control computer unit 130 equivalent to a commercially available personal computer (PC).

Now, the first description is on the microscope unit 110.

It is configured to generate an illumination light from a transmissive illumination light source 1 comprising a halogen lamp for example, condense the light by a collector lens 2, and let it pass through various filters 3 (e.g., a neutral density (ND) filter, an LBD filter (i.e., a blue filter), et cetera), followed by narrowing the illumination field by a view angle aperture 4 and deflecting an angle toward the direction of a stage 8 by a mirror 5.

The deflected illumination light by an angle toward the direction of the stage 8 by the mirror 5 passes through an aperture stop 6 and a condenser lens unit 7, followed by passing through an illumination-use opening part (not shown herein) on the stage 8, thereby being capable of illuminating a sample S placed on a slide glass 9 on the stage 8. An object lens 10 is configured to be selectively insertable into the light path by a plurality of object lenses 10 being held by a revolver 11 on the overhead of the stage 8.

The sample image on the slide glass 9 which is incident to the object lens 10 is guided to an imaging lens 12 by way of a television (TV) camera 13.

The sample image picked up by the TV camera 13 is digitized by an image capture circuit 14 to be imported into the control computer unit 130.

Note that respective parts within the microscope unit 110 are equipped with motors, motor drivers, sensors, et cetera, which are not shown herein, for controlling them electrically; and driving of the respective parts are controlled by a central processing unit (CPU) 21 way of a microscope unit control interface (I/F) circuit 17 and a microscope controller 18.

For example, enabled are controls for moving the various filters 3, such as an ND filter for adjusting an illumination light volume, into and out of the light path, controls for opening and closing the view angle aperture 4 and aperture stop 6, three-dimensional (i.e., X, Y and Z axes) controls for moving the stage 8 in an X-Y plane which is perpendicular to the optical axis and in the Z direction in parallel therewith and controls for rotating the revolver 11 for selectively inserting the object lens into the light path. The movement controls in the Z direction may of course be configured for a driving control of the revolver 11 holding the object lens in lieu of driving the stage 8.

The next is a description on the image input unit 120.

The TV camera 13 is controlled by way of a control-use I/F circuit 16 based on a control instruction from the CPU 21.

Then, a microscope sample image picked up by the TV camera 13 is digitized by the image capture circuit 14, and stored in memory 23 by way of an image capture I/F circuit 15, followed by an image being displayed in a display apparatus 25 and being stored in a recording medium 22 as an image file.

The next is a description on the control computer unit 130.

In the present microscope system 100, the CPU 21 plays a central role for controlling the above noted microscope unit 110 and image input unit 120. The CPU 21 is connected to a CPU bus 20 which further connects the control-use I/F circuit 16 for controlling the TV camera 13, and a microscope unit I/F circuit 17, thereby enabling the CPU 21 to control the respective units.

Also connected to the CPU bus 20 are a recording medium 22 such as a hard disk, the memory 23, display-use frame memory 24, an image capture I/F circuit 15 and a control I/F circuit 26 for controlling a key board and a mouse.

Technique of the present microscope system 100 is accomplished by various programs, such as a microscope control, image input, image process, image display, et cetera, which are stored in the recording medium 22.

The next is a description on an operation of the microscope system 100 configured as described above.

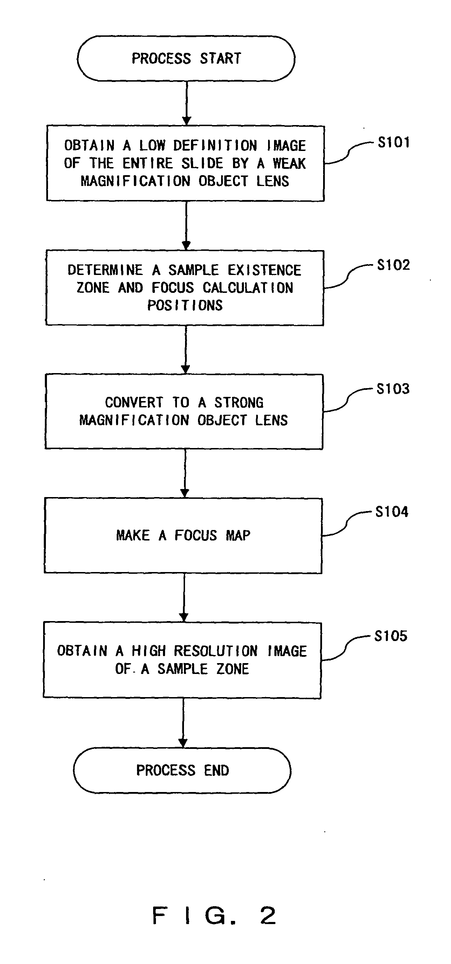

Fig. 2 is a flow chart showing an image input process flow.

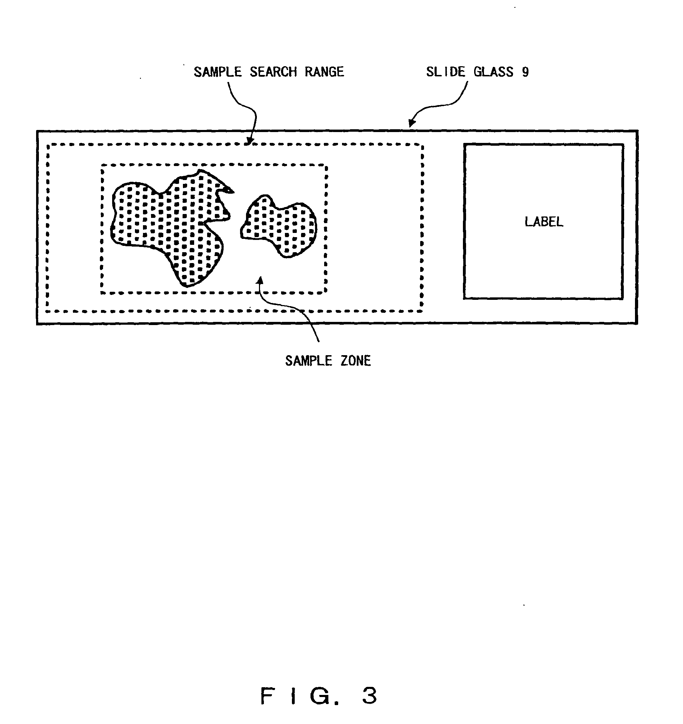

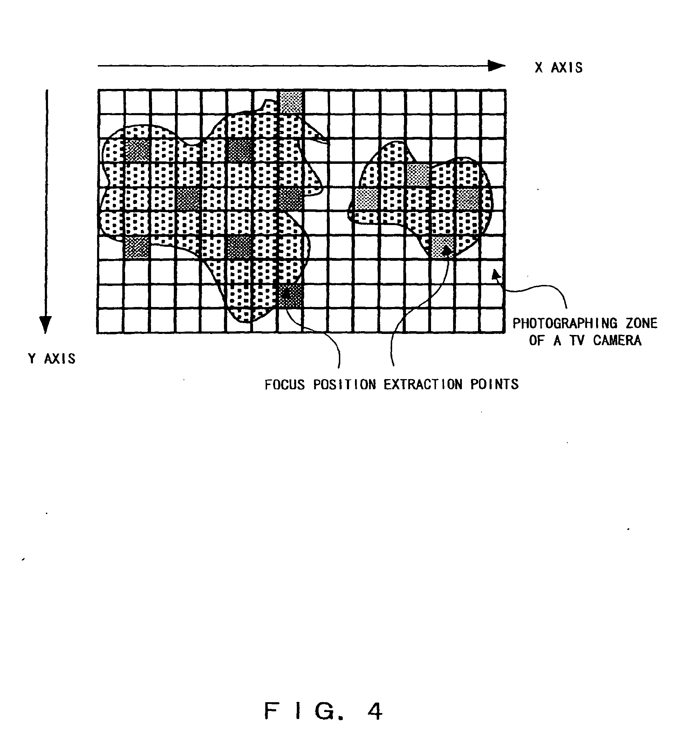

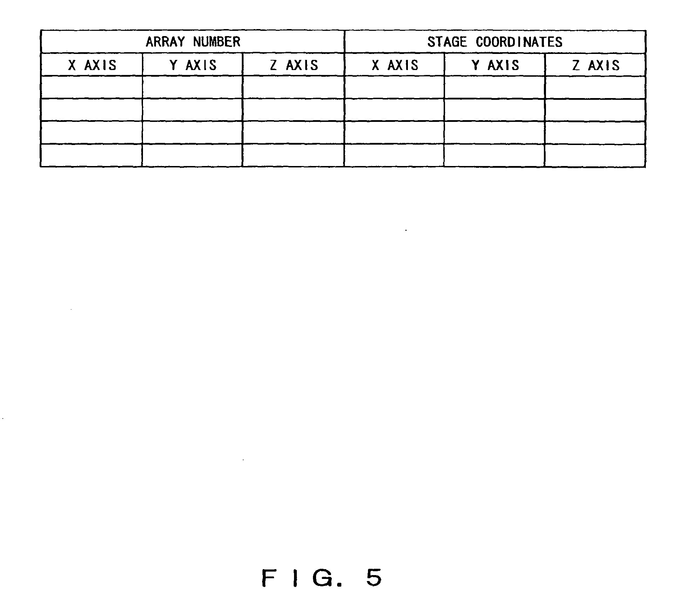

Fig. 3 is a diagram showing a sample placed on a slide glass; Fig. 4 is a diagram exemplifying a sampling part for acquiring a focusing position of an entire sample; and Fig. 5 is a diagram showing a coordinate map for obtaining a microscope image.

While the present image input process carries out an obtainment of a wide vision and high definition image, an example of the obtainment method is described in detail in a Laid-Open Japanese Patent Application Publication No. 09-281405 which has been filed by the present applicant, and therefore a summary description is provided herein by omitting its detail.

First, the step S101 shown in Fig. 2 inserts a low magnification object lens 10, such as 1.25x (i.e., a 1.25x magnification) into the light path, obtains a microscope image by way of the TV camera 13 by an XY-movement of the stage 8 in a predetermined zone (e.g., 25mm vertical by 50mm horizontal) of the slide glass 9 according to a photographing range width of the TV camera 13, performs a compounding of respective images, and stores the entire image of the slide glass in the recording medium 22.

Then the step S102 automatically detects a zone (i.e., determines a sample zone) of a sample S actually being placed on the slide glass 9 shown in Fig. 3 based on the entire image of the slide glass obtained in the above described step S101, and automatically detects focus position extraction points to be sampled (refer to Fig. 4) in order to determine individual focus positions for the entirety of the sample S from within the zone where the sample S exists.

Then the step S103 inserts a high magnification object lens 10, such as a predetermined 40x (i.e., a 40x magnification), into the light path, and moves the stage 8 in the X-Y directions so as to put each of the points extracted in the step S102 into the optical axis position, followed by inputting and evaluating the sample image by way of the TV camera 13 while a Z-movement control is performed, and acquiring an actual focusing position (i.e., coordinates).

Then the step S104 calculates focus positions (i.e., coordinates) of non-extraction points by interpolating from actually measured focusing positions (i.e., coordinates), makes a focus map constituted by the X, Y and Z coordinates, and stores it in the recording medium 22.

Then the step S105 moves the stage 8 to an XYZ coordinates registered in the focus map based on the information in the above noted focus map, inputs an image by way of the TV camera 13, and stores it in the recording medium 22 as an image file while compounding images of the adjacent positions.

A repetition of the present image input process until a completion for all the XYZ coordinates defined by the focus map completes the obtainment of the wide vision and high definition microscope image which is to be stored in the recording medium 22 as an image file.

Note that the processes from the steps S101 to S105 are configured to be automated so that an operator is enabled to complete the obtainment of a wide vision and high definition microscope image merely by placing a slide sample S on the stage 8 and performing a scan start operation by operating on an operation screen (not shown herein).

Also that an image file stored in the recording medium 22 is of course configured to be capable of a compression storage by a known compression algorithm such as JPEG and JPEG 2000.

In addition, it is of course configured in a manner to allow a temporary pause in each step and an operator intervention in an operation, enabling adjustment works in each step such as a change of sample zones, a change/addition/delete of focus position extraction points to be sampled and a magnification change of strong magnification object lens 10 to be used.

Furthermore, it is also of course configured to optimize the illumination system of a microscope associated with a replacement of the object lens 10.

It is also possible to have a separate macro photography optical system, in place of a weak magnification object lens 10, photograph the entirety of the slide glass 9 at once and shorten a photographing time of an image of the entirety of the slide glass 9.

It is further possible to eliminate a lack of continuity of images associated with a stage precision by moving across a predetermined overlap zone with an adjacent image when moving the stage 8 in the X-Y plane, and carrying out an image cut and paste process.

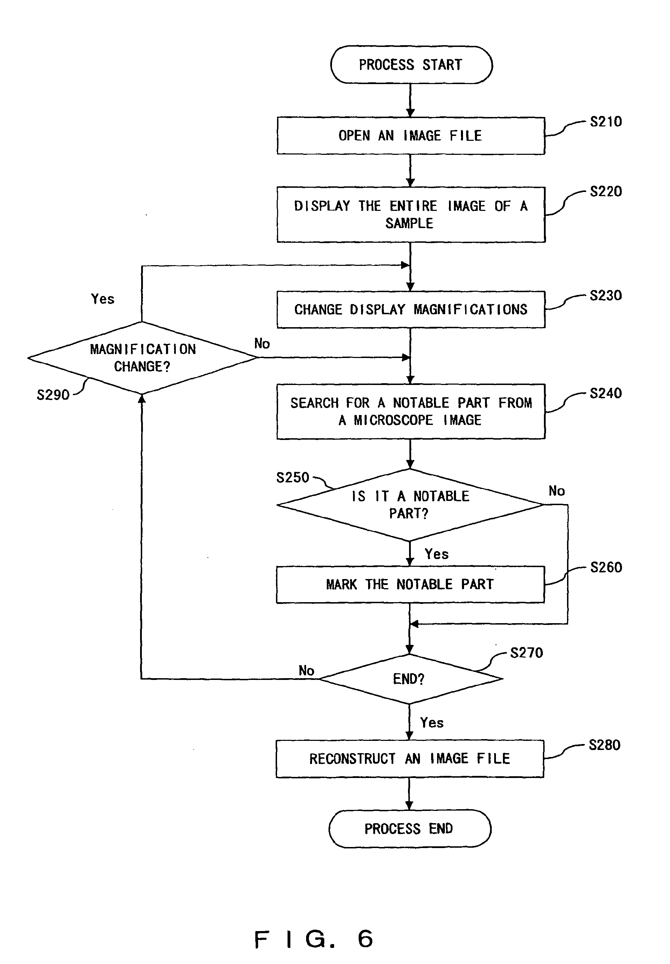

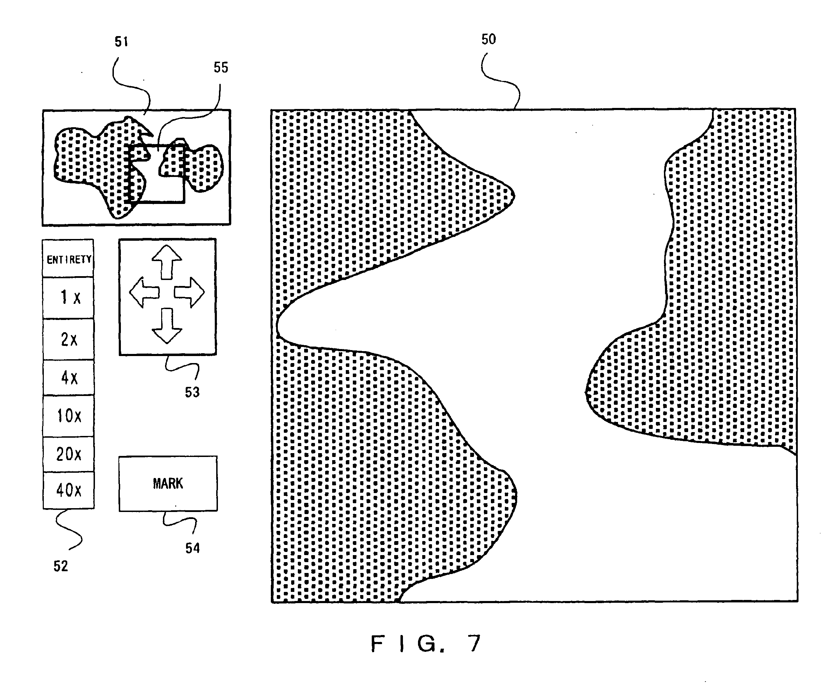

The next is a description on an embodiment of recording, in a high resolution, only an important part in terms of an observation and diagnosis by an operation of an expert, such as a pathologist, with regard to a wide vision and high definition microscope image which has been constructed by the above described image input process, and of storing other parts in a reduced resolution, thereby reducing a file volume, by referring to Figs. 6 and 7.

Fig. 6 is a flow chart for constructing a wide vision and high definition microscope image attached with a notable part; and Fig. 7 is a diagram showing an operation screen for constructing a wide vision and high definition microscope image attached with a notable part.

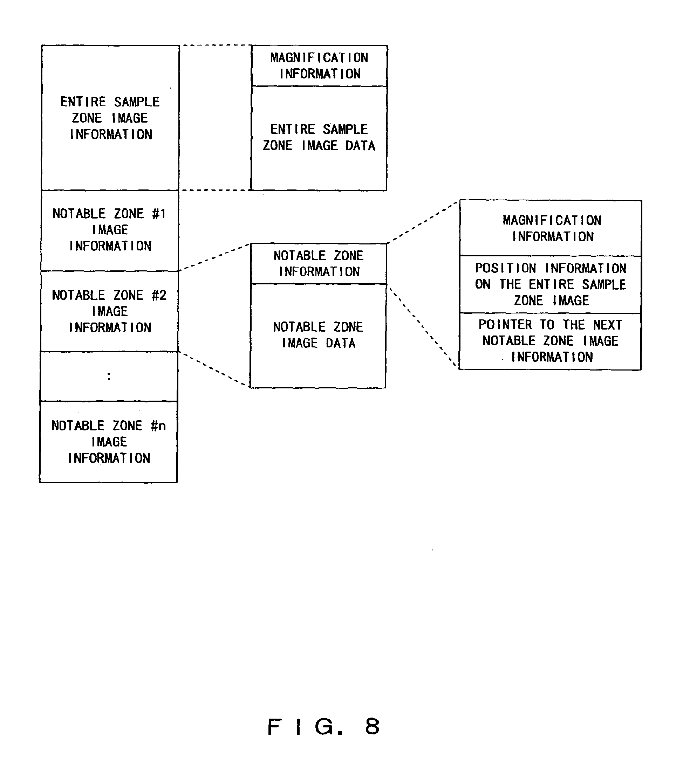

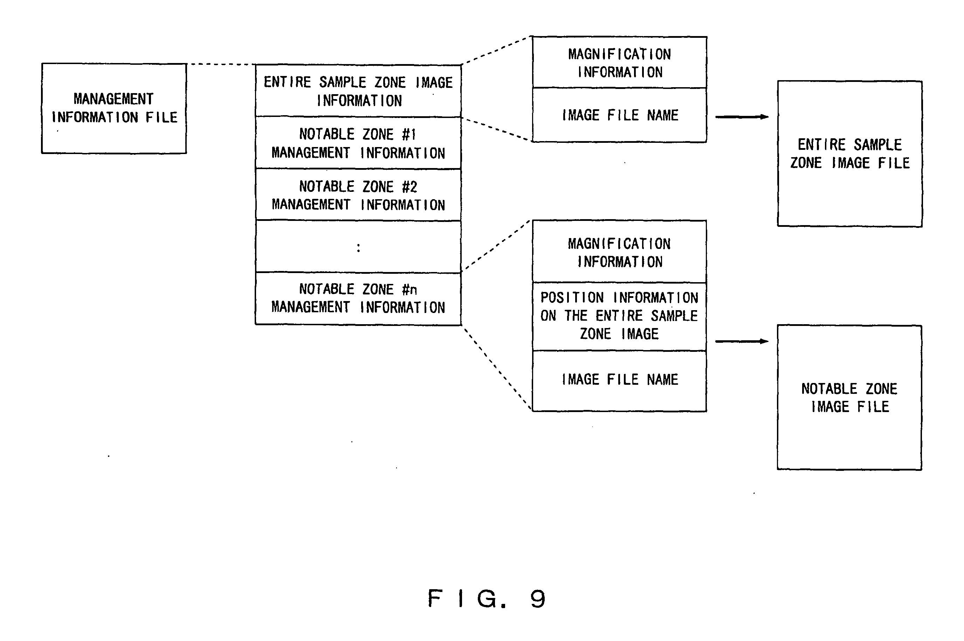

Fig. 8 is a diagram showing a first example of a file structure of a wide vision and high definition microscope image attached with a notable part; and Fig. 9 is a diagram showing a second example of a file structure of a wide vision and high definition microscope image attached with a notable part.

First, the step S201 shown in Fig. 6 opens, by an operation (not shown herein), a wide vision and high definition microscope image stored in the recording medium 22.

The above step is followed by the step S220 displaying an operation screen of Fig. 7 in the display apparatus 25. A main screen 50 initially displays the entirety of image in an appropriate magnification so as to display the entirety of the obtained sample image, enabling a pathologist to grasp the entirety of the obtained sample image.

Then the step S230 clicks on a display magnification change button 52 by the mouse 28, thereby selecting a desired weak or strong magnification. If a 1x (i.e., a 1x magnification) is selected for example, a part of a microscope image with the resolution being lowered to one fortieth (1/40) by a thin-out process is displayed in the main screen 50 in the case of a microscope magnification being 40x (i.e., a 40x magnification) at the time of obtaining the image.

A reduced size image of the entire sample is always displayed in an entire sample image navigation screen 51, in which currently displayed is an observation in-progress rectangular cursor 55 for indicating an observation zone displayed in the main screen 50, thereby enabling the pathologist to easily grasp what part of the sample is currently magnified and observed.

Then, the step S240 moves a part to be observed and search for an abnormal notable part such as a malignant tumor by an operation of a view field movement button or arrow key on the key board 27 or drag operation, et cetera, of the mouse 28 in the main screen 50.

If a notable part is found ("yes" for S250), the step S260 clicks on a mark button 54 by the mouse 28, thereby recording, in the memory 23, an observation zone currently displayed in the main screen 50 as a notable zone.

Note that a configuration may of course be in a manner to determine a notable zone by entering a notable zone designation mode by clicking on a mark button 54 with a mouse, followed by designating a rectangle by a drag operation of the mouse 28 within the main screen 50.

Then, in the case of searching for a notable part ("yes" for S290), the operations from the steps S230 to S260 are repeated according to a necessity or unnecessity of changing magnifications.

If a search and marking for a notable part is completed ("yes" for S270), the step S280 reduces an information volume (i.e., resolution) of the entirety of the original image while maintaining an information volume of the notable zone, thereby storing a wide vision and high definition microscope sample image attached with notable zone information by a file structure as shown in Fig. 8, which has reduced a file volume for recording and retaining in the state of maintaining an appropriate information volume according to the notable part and un-notable part, in the recording medium 22.

Note that it is configured to have a capability of selecting a predetermined magnification, such as being equivalent to a 4x (i.e., a 4x magnification) object lens, or a discretionary magnification weaker than the magnification of the object lens at the time of obtaining the present image by an operation (not shown herein) for selecting a magnification, as to how much of an information volume (i.e., resolution) to be reduced for an un-notable part.

For example, in the case of obtaining a wide vision and high definition image of a microscope sample S by using a 40x (i.e., a 40x magnification) object lens 10, a reduction of an information volume equivalent to a 4x (i.e., a 4x magnification) makes it possible to reduce an entire sample zone image volume to one hundredths (1/100), and a reduction of the information volume equivalent to a 10x (i.e., a 10x magnification) makes it possible to reduce it to one sixteenths (1/16).

Note that what equivalence of magnification has been used for converting the entire sample zone is recorded as information as shown within Fig. 8.

The notable zone image information stores notable zone management information such as magnification information at the time of obtaining a wide vision and high definition image of a microscope sample, position information on an entire sample zone image and a pointer to the next notable zone image information; and image data retaining an information volume of the original image within the range designated by the above noted position coordinates.

Note that an alternative configuration may be such as to comprise a management information file of a text base, an entire sample weak magnification image file and one or a plurality of notable zone image files as shown in Fig. 9; and store as a common file structure enabling a handling by commercially available software, Web browser software, et cetera.

Note further that a configuration may be such that a magnification for storing each notable zone is individually and discretionary selected within a range between a magnification larger than a conversion magnification for reducing information volume of the entire sample zone and a magnification no larger than one for obtaining a wide vision and high definition image of a microscope sample, that is, an original image, by a selection operation (not shown herein).

As described above, the present first embodiment enables the construction of a wide vision and high definition microscope image by an operation by a general operator in lieu of an expert such as a pathologist, and additionally enables the reduction of a memory volume for a storage while securing a necessary and appropriate information volume by recording only a notable zone of the image and reducing an information volume (i.e., a resolution) of the entire sample by an operation by an expert such as a pathologist.

The next is a description on a second embodiment.

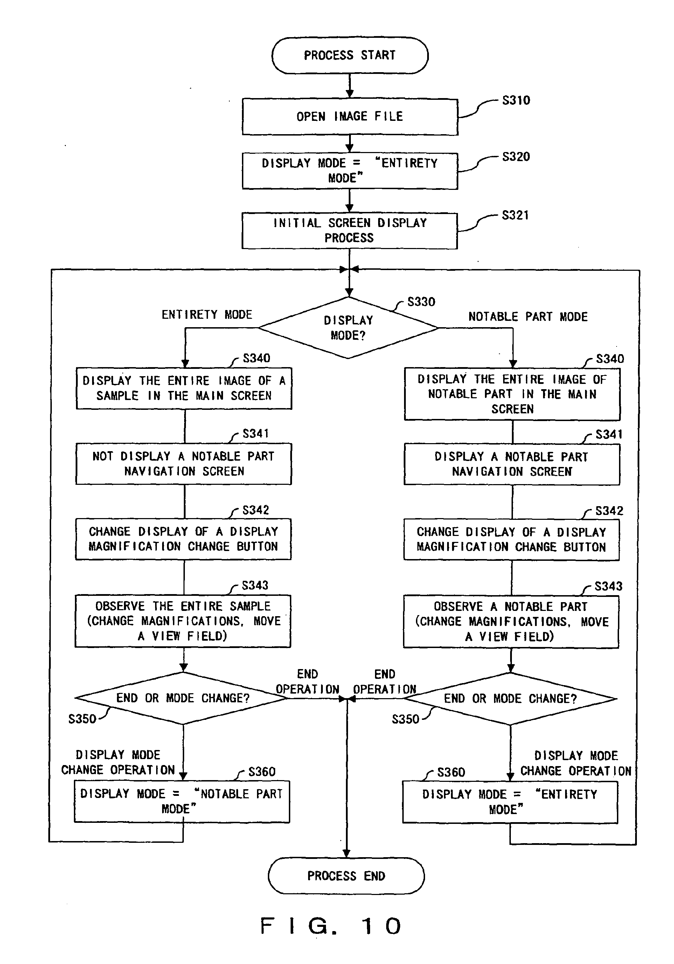

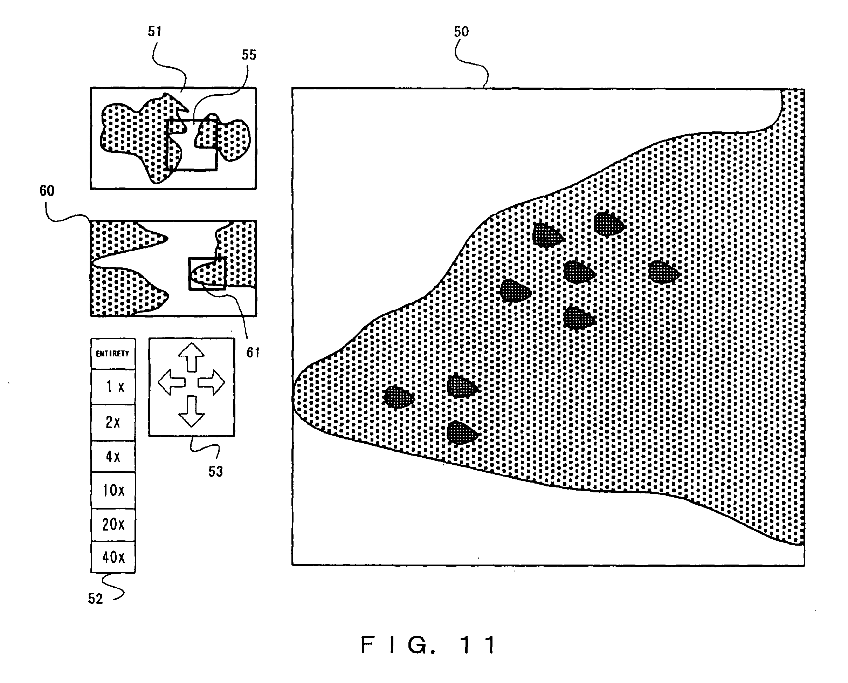

Fig. 10 is a flow chart showing an operation for observing a wide vision and high definition microscope image attached with a notable part; and Fig. 11 is a diagram showing an observation screen of a wide vision and high definition microscope image attached with a notable part.

First, the step S310 opens a wide vision and high definition microscope image file attached with a notable part which has been described in the above noted first embodiment.

Then the step S320 sets an "entirety mode" as an initial value of a display mode and the step S321 performs an initialization process for displaying an operation screen shown in Fig. 11. For example, the contents are to thumbnail the entire sample image in the entire sample image navigation screen 51, display a view field movement button 53, et cetera.

Process contents of the steps hereafter are different between the "entirety mode" and "notable part mode" (according to a judgment in S330) of a display mode, a description here is provided by the unit of step, however.

In the step S340, the main screen 50 displays, as the initial value, the entire image of a sample obtainable from image data of the entire sample zone in the case of the "entirety mode", while, as the initial value, the entire image of a notable zone selected by a later described user selection operation in the case of the "notable part mode".

In the step S341, a notable part navigation screen 60 shows nothing in the case of the "entirety mode", while turns to a displaying mode in the case of the "notable part mode", displaying the entire image of the selected notable zone as a thumbnail.

In the step S342, the display magnification change button 52 shows a selectable magnification according to a display mode. The magnification of the "entirety mode" shows magnification information of the entire sample zone image stored in the present image file as the maximum magnification, while that of the "notable part mode" shows magnification information stored in the management information of the notable part as the maximum magnification.

Then, in the step S343, the entire sample is observed in the "entirety mode", while the notable zone is observed in the "notable part mode".

That is, to move a part for a main observation by changing magnifications by a selection of the display magnification change button 52, by operating the view field movement button 53 or arrow key of the key board 27, or by a drag operation of the mouse 28 in the main screen 50, et cetera, and display a target zone on the main screen 50 for observation. Incidentally, in association with a change of observation magnification and a moving a view field, a zone display indicating such as which part is presently observed is displayed in each navigation screen by a rectangle.

In the case of the "entirety mode", which zone of the entire sample image displayed in the main screen 50 is observed is displayed by the observation in-progress rectangular cursor 55 within the entire sample image navigation screen 51.

And, if one or plurality of notable zones registered as notable part(s) exists within the present observation zone, it is, or they are, displayed in the main screen 50 by a rectangle(s).

In the "notable part mode", the selected notable zone is displayed by a rectangle in the observation in-progress rectangular cursor 55 within the entire sample image navigation screen 51, and a notable part zone indicated by the main screen 50 is displayed by a rectangle in an in-observation rectangle cursor 61 within a notable part navigation screen 60.

Then the following operation is performed if a display mode is changed (S350).

A change from the "entirety mode" to "notable part mode" changes to a mode for displaying a notable part by an operation of double-clicking a notable part display rectangle cursor (not shown herein), which is displayed in the main screen 50, with the mouse 28. Contrarily, a transition from the "notable part mode" to "entirety mode" is carried out by pressing the "Esc" key of the key board 27.

As described above, the present second embodiment makes it possible to exhibit a rationale of knowledge as to which zone is selected as a notable part and also simultaneously observe different magnification information, such as the entire sample image, weak magnification image and strong magnification image, in correlation, thereby enabling an easy grasp of a morphological characteristic.

The next is a description on a third embodiment.

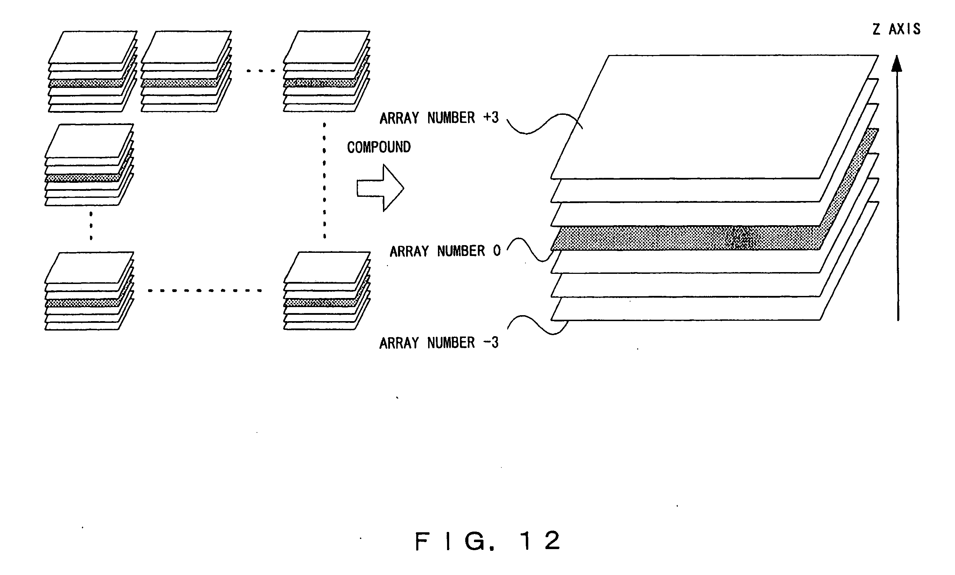

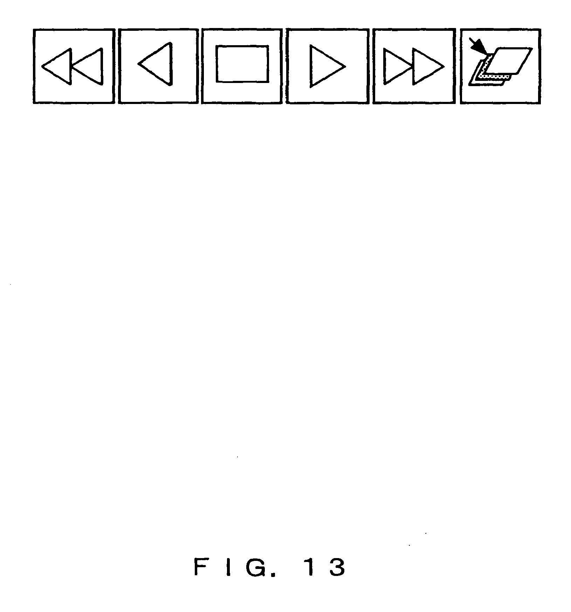

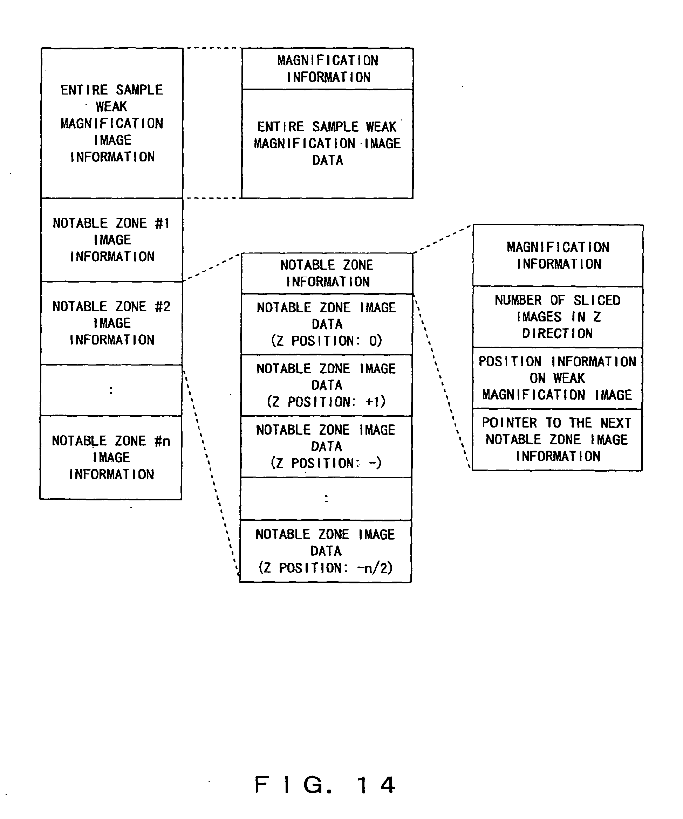

Fig. 12 is a diagram showing a manner of compounding a wide vision and high definition microscope image having different focus points; Fig. 13 is a diagram showing operation buttons for displaying different focus points; and Fig. 14 is a diagram exemplifying file structures of a multiple focus-point, wide vision and high definition microscope image attached with a notable part.

In the third embodiment, a method for obtaining a three-dimensional wide vision and high definition image having different focus positions is described by using Fig. 2 which has been used for describing the first embodiment.

The steps S101 through S104 are the same as in the case of the first embodiment and therefore its description is omitted here.

Then, the process in the step S105 moves the stage 8 to an XYZ coordinates registered in the focus map based on the focus map information of Fig. 5, moves the Z coordinate up and down by a predetermined distance (which is determined by a focal depth of an object lens 10) with the Z coordinate defined by the focus map as the center (i.e., an array number 0), inputs a plurality of microscope images with different focus positions by way of the TV camera 13, and stores in the recording medium 22 as an image file while compounding with images of adjacent positions on the X-Y plane of the same Z axis array number as shown in Fig. 12.

A repetition of the present image input process until a completion for all the X-Y coordinates defined by the focus map completes an obtainment of a wide vision and high definition microscope image with different focus positions, which is then stored in the recording medium as an image file.

The multiple focus-point, wide vision and high definition image obtained in the above described step is converted into a multiple focus-point, wide vision and high definition microscope image attached with notable part information by the same method as the process flow of Fig. 6 and the operation screen of Fig. 7 which have been described for the first embodiment, thereby enabling a reduction of a memory volume for storing it.

The following is a description of a process of a part unique to the present third embodiment.

The step S210 shown in Fig. 6 opens an image file of the Z-central coordinate (i.e., the array number 0) which is calculated as focus position at the time of obtaining the image.

In the process for searching a notable part from the microscope image in the step S240, an operation of a focus movement button shown in Fig. 13, in addition to the above described view point movement, performs a repeated Z-axis image replay in a frame-by-frame advance, "+ direction □ - direction □ + direction" or "- direction □ + direction □ - direction" for enabling an observation of sample images having different focus position in the main screen 50.

Then, the following process is performed in an image file reconstruction process of the step S280:

The process retains all original image information including images having different focus positions for a notable part, while compounds a single image focused also on a material(s) existing in a different position(s) in the optical axis direction from a plurality of images having different focus positions by a known image addition and recovery filtering processes for the entirety of a sample S, also reduces the resolution, as in the process described for the first embodiment, and stores it in the recording medium 22 by the structure shown in Fig. 14.

For example, in the case of obtaining a wide vision and high definition image having information with eleven different focus positions by using a 40x (i.e., a 40x magnification) object lens 10; if the information volume is reduced to one equivalent to 4x (i.e., a 4x magnification), the image information volume of the entire sample zone can be reduced to 1/1100, or if the information volume is reduced to one equivalent to 10x (i.e., a 10x magnification), it can be reduced to 1/176.

A multiple focus wide vision and high definition microscope image attached with notable part information stored in the recording medium 22 by the above described process can be observed likewise by the method described for the second embodiment. In addition, in the case of a display mode being "notable part mode", the focus movement buttons shown by Fig. 13 are displayed in the operation screen, enabling an observation of images having different focus positions.

An integration of a storage magnification of each notable zone and a plurality of images having different focus positions into a single image and a capability of selectively reducing an information volume of notable zones make it possible to further reduce a storage volume for recording.

As described above, the present third embodiment enables an observation of a cytological sample and even a tissue sample of a certain thickness, specifically, intussusception information of a cell, details of a nucleus, et cetera, in various focusing in the optical axis direction by changing focus positions in a notable part.

In addition, a problem of a mis-focus caused by calculating a focus position of a sample by predicting from information of surroundings can be avoided.

As such, each of the embodiments has been described by referring to the accompanying drawings; a microscope system to which the present invention is applied, however, may of course be a single apparatus, a system or integrated apparatus comprising a plurality of apparatuses, or a system for carrying out a process by way of a network such as LAN, WAN, et cetera, provided that the function of the microscope system can be carried out, in lieu of being limited to the above described individual embodiments.

The microscope system can also be accomplished by a system comprising a CPU, memory such as ROM and RAM, an input apparatus, an output apparatus, an external recording apparatus, a media drive apparatus, a portable storage medium, and a network connection apparatus, with all of which being connected to a bus. That is, it is apparently possible to accomplish the microscope system by supplying it with the memory, such as ROM and RAM, external storage apparatus and a portable storage medium which record a program code of the software implementing a system configured by the above described individual embodiments, and a computer comprised by the microscope system reading and executing the program code.

In this case, the program code per se which is read from the portable storage medium, et cetera, implements new function of the present invention, making the portable storage medium recording the program code constitute the present invention.

A portable storage medium for supplying the program code can use, for example, flexible disk, hard disk, optical disk, magneto optical disk, CD-ROM, CR-R, DVD-ROM, DVD-RAM, magnetic tape, nonvolatile memory card, ROM card, various storage media recording the program by way of a network connection apparatus (i.e., a telecommunication line in other words) such as e-mail and PC communications.

Also, the above described function of each embodiment can be implemented by a computer executing the program code read out to the memory, and it is also implemented by a process as a result of an operating system (OS) working in the computer executing a part of the actual processes or the entirety thereof based on instructions of the program code.

Furthermore, the program code read from a portable storage medium or the program (and data) provided by a program (and data) provider is written to memory which is comprised by a function extension board inserted into a computer or comprised by a function extension unit connected thereto, followed by a CPU, et cetera, comprised by the function extension board or function extension unit executing a part of the actual process, or the entirety thereof, based on an instruction of the program code, thereby enabling an implementation of the functions of the above described individual embodiments.

That is, the present invention allows an adoption of various configurations or forms possible within the scope thereof, in lieu of being limited to the above described each of the individual embodiments.

The present invention is contrived to enable anyone to easily obtain a multiple focus, wide vision and high definition microscope image and reduce a storage volume for a recording by changing an information volume appropriately in a notable and non-notable parts.

The present invention is also contrived to exhibit a notable part, thereby making it possible to define a target part of knowledge obtained from the present sample.

The present invention is also contrived to enable a simultaneous observation of an extra weak magnification macro image, such as the entirety of a sample, and a weak and strong magnification images, thereby making it possible to easily obtain morphological knowledge from a sample.

## Claims

1. A microscope system (100), comprising:
image information obtainment means (120) for obtaining a digital image of the entirety, or a part, of a sample when an object lens (10) and the sample are moved relatively to each other in the perpendicular direction against an optical axis;
specific zone designation means (21) for designating at least one specific zone of the digital image obtained by the image information obtainment means (120) as a notable digital partial image;
specific zone image storage means (22) for storing the notable digital partial image of the specific zone designated by the specific zone designation means (21);
image information reduction means (21) for reducing an information volume of a non-notable digital partial image being not designated by the specific zone designation means (21) among the digital image obtained by the image information obtainment means (120) by reducing a resolution of this non-notable digital partial image;
reduction image storage means (22) for storing the non-notable digital partial image reduced by the image information reduction means (21);
image position relationship storage means (22) for storing a positional relationship between the notable digital partial image stored by the specific zone image storage means (22) and the non-notable digital partial image stored by the reduction image storage means (22);
entire zone image display means (51) for displaying, in a discretionary magnification, the entirety of a digital image of a sample constituted by said notable digital partial image stored by said specific zone image storage means (22) and constituted by said non-notable digital partial image stored by said reduction image storage means (22);
specific zone image display means (50) for displaying the notable digital partial image stored by the specific zone image storage means (22) in a discretionary magnification;
specific zone display means (60) for displaying at least one image zone designated by said specific zone designation means (21);
sample entirety navigation means (55) for displaying, in a rectangle (55), a zone indicating the notable digital partial image displayed by the specific zone image display means (50) within the entire image of a sample displayed by the entire zone image display means (51); and
specific zone navigation means (61) for displaying a zone indicating which part of the notable digital image is displayed by the specific zone image display means (50).

2. The microscope system (100) according to claim 1, wherein
said image information obtainment means (120) obtains three-dimensional digital image of the entirety, or a part, of said sample by moving an object lens (10) and the sample relatively to each other in the perpendicular direction against an optical axis and in the optical axis direction.

3. An observation method carried out by a microscope system (100), comprising:
obtaining a digital image of the entirety, or a part, of a sample by moving an object lens (10) and a sample relatively to each other in the perpendicular direction against an optical axis;
designating at least one specific zone of the obtained digital image;
storing a digital image of the designated specific zone in a specific zone image database (22) as a notable digital partial image;
reducing an information volume of a non-notable digital partial image not designated among the obtained digital image by reducing a resolution of this non-notable digital partial image;
storing the reduced non-notable digital partial image in a reduction image database (22);
storing a positional relationship between the notable digital partial image stored in the specific zone image database (22) and the non-notable digital partial image stored in the reduction image database (22);
displaying, in a discretionary magnification, the entirety of a digital image of a sample constituted by the notable digital partial image stored in the specific zone image database (22) and the non-notable digital partial image stored in the reduction image database (22);
displaying, in a discretionary magnification, the notable digital partial image stored in the specific zone image database (22);
displaying at least one designated image zone among the displayed entire digital image;
displaying, in a rectangle, a zone indicating the notable digital partial image of the displayed specific zone within the entirety of the displayed digital image of a sample; and
displaying, in a rectangle, a zone indicating the notable digital partial image of the displayed specific zone within the digital image of the displayed specific zone.

4. An observation program product to be executed by a microscope system (100), comprising the procedures of:
obtaining a digital image of the entirety, or a part, of a sample by moving an object lens (10) and a sample relatively to each other in the perpendicular direction against an optical axis;
designating at least one specific zone of the obtained digital image;
storing a digital image of the designated specific zone in a specific zone image database (22) as a notable digital partial image;
reducing an information volume of non-notable digital partial image not designated among the obtained digital image by reducing a resolution of this non-notable digital partial image;
storing the reduced non-notable digital partial image in a reduction image database (22);
storing a positional relationship between the notable digital partial image stored in the specific zone image database (22) and the non-notable digital partial image stored in the reduction image database (22);
displaying, in a discretionary magnification, the entirety of a digital image of a sample constituted by the notable digital partial image stored in the specific zone image database (22) and the non-notable digital partial image stored in the reduction image database (22);
displaying, in a discretionary magnification, the notable digital partial image stored in the specific zone image database (22);
displaying at least one designated image zone among the displayed entire digital image;
displaying, in a rectangle (55), a zone indicating the notable digital partial image of the displayed specific zone within the entirety of the displayed digital image of a sample; and
displaying, in a rectangle (61), a zone indicating the notable digital partial image of the displayed specific zone within the digital image of the displayed specific zone.

## Patentansprüche

1. Mikroskopsystem (100), folgendes aufweisend:
eine Erfassungseinrichtung (120) für Bildinformation zum Erfassen eines digitalen Bildes der Gesamtheit oder eines Teil einer Probe, wenn ein Objektiv (10) und die Probe relativ zueinander in senkrechter Richtung zu einer optischen Achse bewegt werden;
eine Bestimmungseinrichtung (21) für einen spezifischen Bereich zum Bestimmen von zumindest einem spezifischen Bereich des digitalen Bildes, das von der Erfassungseinrichtung (120) für Bildinformation erfasst wurde, als relevantes digitales Teilbild;
eine Speichereinrichtung (22) für das Bild eines spezifischen Bereichs zum Speichern des relevanten digitalen Teilbildes des spezifischen Bereichs, den die Bestimmungseinrichtung (21) bestimmt hat;
eine Reduzierungseinrichtung (21) zum Reduzieren einer Informationsmenge eines nicht relevanten digitalen Teilbildes, das nicht von der Bestimmungseinrichtung (21) für den spezifischen Bereich unter den von der Erfassungseinrichtung (120) erfassten digitalen Bildern bestimmt wurde, durch Reduzieren der Auflösung des nicht relevanten digitalen Teilbilds;
eine Speichereinrichtung (22) für das reduzierte Bild zum Speichern des mit der Reduzierungseinrichtung (21) reduzierten nicht relevanten digitalen Teilbildes;
eine Speichereinrichtung (22) für ein Bild-Positionsverhältnis zum Speichern eines Positionsverhältnisses zwischen dem relevanten digitalen, in der Speichereinrichtung (22) gespeicherten Teilbild und dem nicht relevanten, in der Speichereinrichtung (22) gespeicherten digitalen Teilbild;
eine Anzeigeeeinrichtung (51) für das Gesamtbild zum Anzeigen der Gesamtheit des digitalen Bildes der Probe in beliebiger Vergrößerung, welches erzeugt ist aus dem in der Speichereinrichtung (22) für den spezifischen Bildbereich gespeicherten relevanten digitalen Teilbild und dem in der Speichereinrichtung (22) für das reduzierte Bild gespeicherten nicht relevanten digitalen Teilbild;
eine Anzeigeeinrichtung (50) für das Bild des spezifischen Bereiches zum Anzeigen des relevanten digitalen Teilbildes, das in einer beliebigen Vergrößerung in der Speichereinrichtung (22) für das Bild des spezifischen Bereiches gespeichert ist;
eine Anzeigeeinrichtung (60) für den spezifischen Bereich zum Anzeigen von zumindest einem durch die Bestimmungseinrichtung (21) für den spezifischen Bereich bestimmten Bildbereich;
eine Navigationseinrichtung (55) für die Probengesamtheit zum Anzeigen einer Zone in einem Rechteck (55), die das relevante digitale Teilbild angibt, welches durch die Anzeigeeinrichtung (50) für die spezifische Bildzone im Gesamtbild der Probe, wie es durch die Anzeigeeinrichtung (51) für die Gesamtzone angezeigt ist, angibt; und
eine Anzeigeeinrichtung (61) für den spezifischen Bereich zum Anzeigen eines Bereichs, der angibt, welcher Teil des relevanten digitalen Bildes durch die Anzeigeeinrichtung (50) für das spezifische Bereichsbild angezeigt ist.

2. Mikroskopsystem (100) nach Anspruch 1, wobei
die Bildinformationserfassungseinrichtung (120) dreidimensionale digitale Bilder von der Gesamtheit oder einem Teil der Probe durch eine relative Bewegung zwischen einem Objektiv (10) und der Probe in senkrechter Richtung zu einer optischen Achse und in Richtung der optischen Achse erfasst.

3. Beobachtungsverfahren unter Verwendung eines Mikroskopsystems (100), folgende Schritte aufweisend:
Erfassen eines digitalen Bilds von der Gesamtheit oder einem Teil einer Probe durch eine relative Bewegung zwischen einem Objektiv (10) und der Probe in senkrechter Richtung zu einer optischen Achse;
Bestimmen von zumindest einem spezifischen Bereich des erfassten digitalen Bilds;
Speichern eines digitalen Bilds des bestimmten spezifischen Bereichs in einer Bilddatenbank (22) für den spezifischen Bereich als ein relevantes digitales Teilbild;
Reduzieren einer Informationsmenge eines nicht relevanten digitalen Teilbilds, das nicht im erfassten digitalem Bild bestimmt wurde, durch Reduzieren einer Auflösung des nicht relevanten digitalen Teilbilds;
Speichern des reduzierten nicht relevanten digitalen Teilbilds in einer Datenbank (22) für ein reduziertes Bild;
Speichern eines Positionsverhältnisses zwischen dem relevanten digitalen Teilbild, gespeichert in der Bilddatenbank (22) für den spezifischen Bereich, und dem nicht relevanten digitalen Teilbild, gespeichert in der Datenbank (22) für ein reduziertes Bild;
Anzeigen der Gesamtheit eines digitalen Bildes der Probe, wie es aus dem relevanten digitalen Teilbild erzeugt und in der Bilddatenbank (22) für den spezifischen Bereich gespeichert ist in einer beliebigen Vergrößerung, und des nicht relevanten digitalen, in der Datenbank (22) für das reduzierte Bild gespeicherten Teilbildes;
Anzeigen des in der Bilddatenbank (22) für den spezifischen Bereich gespeicherten relevanten digitalen Teilbildes in einer beliebigen Vergrößerung;
Anzeigen von zumindest einem bestimmten Bildbereich innerhalb des angezeigten Gesamtdigitalbildes;
Anzeigen eines Bereichs in einem Rechteck, der das relevante digitale Teilbild des angezeigten spezifischen Bereichs innerhalb der Gesamtheit des angezeigten digitalen Bildes einer Probe kennzeichnet; und
Anzeigen eines Bereichs in einem Rechteck, der das relevante digitale Teilbild des angezeigten spezifischen Bereichs innerhalb des digitalen Bildes des angezeigten spezifischen Bereichs kennzeichnet.

4. Beobachtungsprogrammprodukt zur Ausführung mit einem Mikroskopsystem (100), die folgenden Verfahren enthaltend:
Gewinnen eines digitalen Bildes der Gesamtheit oder eines Teils einer Probe durch Relativbewegung zwischen einer Objektivlinse (10) und der Probe in Richtung senkrecht zu einer optischen Achse;
Bestimmen von zumindest einem spezifischen Bereich des gewonnen digitalen Bildes;
Abspeichern eines digitalen Bildes des bestimmten spezifischen Bereichs in einer Datenbank (22) für ein Bild eines spezifischen Bereichs als ein relevantes digitales Teilbild;
Reduzieren einer Informationsmenge bezüglich nicht relevanter digitaler Teilbilder, die nicht unter den gewonnenen digitalen Bildern bestimmt worden sind durch Reduzieren der Auflösung dieses nicht relevanten digitalen Teilbildes;
Abspeichern des reduzierten nicht relevanten digitalen Teilbildes in einer Datenbank (22) für reduzierte Bilder;
Abspeichern einer Positionsbeziehung zwischen dem relevanten digitalen, in der Datenbank (22) für spezifische Bereichsbilder abgespeicherten digitalen Teilbild und dem nicht relevanten, in der Datenbank (22) für reduzierte Bilder abgespeicherten digitalen Teilbild;
Anzeigen der Gesamtheit eines digitalen Bildes der Probe, und zwar in diskreter Vergrößerung, welches durch ein relevantes digitales Teilbild, wie es in der Datenbank (22) für Bilder spezifischer Bereiche abgespeichert ist, und dem nicht relevanten digitalen Teilbild, wie es in der Datenbank (22) für reduzierte Bilder abgespeichert ist, zusammengefügt ist;
Anzeigen des relevanten digitalen Teilbildes, und zwar in diskreter Vergrößerung, wie es in der Datenbank (22) für Bilder des spezifischen Bereiches abgespeichert ist;
Anzeigen von zumindest einem bestimmten Bildbereich in der Gesamtheit des angezeigten digitalen Bildes;
Anzeigen eines Bereichs in einem Rechteck (55), der das relevante digitale Teilbild des angezeigten spezifischen Bereichs in der Gesamtheit des angezeigten digitalen Bildes der Probe angibt; und
Anzeigen eines Bereichs in einem Rechteck (61), der das relevante digitale Teilbild des angezeigten spezifischen Bereichs in dem Digitalbild des angezeigten spezifischen Bereichs angibt.

## Revendications

1. Système de microscope (100), comprenant :
un moyen d'obtention (120) d'informations d'image pour obtenir une image numérique de la totalité, ou d'une partie, d'un échantillon lorsqu'une lentille d'objectif (10) et l'échantillon sont déplacés l'un par rapport à l'autre dans la direction perpendiculaire par rapport à un axe optique ;
un moyen de désignation (21) de zone spécifique pour désigner au moins une zone spécifique de l'image numérique obtenue par le moyen d'obtention (120) d'informations d'image comme une image numérique partielle notable ;
un moyen de mémorisation (22) d'image de zone spécifique pour mémoriser l'image numérique partielle notable de la zone spécifique désignée par le moyen de désignation (21) de zone spécifique ;
un moyen de réduction (21) d'informations d'image pour réduire un volume d'informations d'une image numérique partielle non notable n'étant pas désignée par le moyen de désignation (21) de zone spécifique dans l'image numérique obtenue par le moyen d'obtention (120) d'informations d'image en réduisant une résolution de cette image numérique partielle non notable ;
un moyen de mémorisation (22) d'image de réduction pour mémoriser l'image numérique partielle non notable réduite par le moyen de réduction (21) d'informations d'image ;
un moyen de mémorisation (22) de relation de positions d'images pour mémoriser une position relationnelle entre l'image numérique partielle notable mémorisée par le moyen de mémorisation (22) d'image de zone spécifique et l'image numérique partielle non notable mémorisée par le moyen de mémorisation (22) d'image de réduction ;
un moyen d'affichage (51) d'image de zone entière pour afficher, à un grossissement discrétionnaire, la totalité d'une image numérique d'un échantillon constituée par ladite image numérique partielle notable mémorisée par ledit moyen de mémorisation (22) d'image de zone spécifique et constituée par ladite image numérique partielle non notable mémorisée par ledit moyen de mémorisation (22) d'image de réduction ;
un moyen d'affichage (50) d'image de zone spécifique pour afficher l'image numérique partielle notable mémorisée par ledit moyen de mémorisation (22) d'image de zone spécifique à un grossissement discrétionnaire ;
un moyen d'affichage (60) de zone spécifique pour afficher au moins une zone d'image désignée par ledit moyen de désignation (21) de zone spécifique ;
un moyen de navigation (55) dans la totalité de l'échantillon pour afficher, dans un rectangle (55), une zone indiquant l'image numérique partielle notable affichée par le moyen d'affichage (50) d'image de zone spécifique à l'intérieur de l'image entière d'un échantillon affichée par le moyen d'affichage (51) d'image de zone entière ; et
un moyen de navigation (61) dans la zone spécifique pour afficher une zone indiquant quelle partie de l'image numérique partielle notable est affichée par le moyen d'affichage (50) d'image de zone spécifique.

2. Système de microscope (100) selon la revendication 1, dans lequel
ledit moyen d'obtention (120) d'informations d'image obtient une image numérique tridimensionnelle de la totalité, ou d'une partie, dudit échantillon en déplaçant une lentille d'objectif (10) et l'échantillon l'un par rapport à l'autre dans la direction perpendiculaire par rapport à un axe optique et dans la direction de l'axe optique.

3. Procédé d'observation mis en oeuvre par un système de microscope (100), comprenant :
l'obtention d'une image numérique de la totalité, ou d'une partie, d'un échantillon en déplaçant une lentille d'objectif (10) et un échantillon l'un par rapport à l'autre dans la direction perpendiculaire par rapport à un axe optique ;
la désignation d'au moins une zone spécifique de l'image numérique obtenue ;
la mémorisation d'une image numérique de la zone spécifique désignée dans une base de données (22) d'images de zone spécifique comme une image numérique partielle notable ;
la réduction d'un volume d'informations d'une image numérique partielle non notable non désignée dans l'image numérique obtenue en réduisant une résolution de cette image numérique partielle non notable ;
la mémorisation de l'image numérique partielle non notable réduite dans une base de données (22) d'images de réduction ;
la mémorisation d'une relation positionnelle entre l'image numérique partielle notable mémorisée dans la base de données (22) d'images de zone spécifique et l'image numérique partielle non notable mémorisée dans la base de données (22) d'images de réduction ;
l'affichage, à un grossissement discrétionnaire, de la totalité d'une image numérique d'un échantillon constituée par l'image numérique partielle notable mémorisée dans la base de données (22) d'images de zone spécifique et par l'image numérique partielle non notable mémorisée dans la base de données (22) d'images de réduction ;
l'affichage, à un grossissement discrétionnaire, de l'image numérique partielle notable mémorisée dans la base de données (22) d'images de zone spécifique ;
l'affichage d'au moins une zone d'image désignée dans l'image numérique entière affichée ;
l'affichage, dans un rectangle, d'une zone indiquant l'image numérique partielle notable de la zone spécifique affichée au sein de la totalité de l'image numérique affichée d'un échantillon ; et
l'affichage, dans un rectangle, d'une zone indiquant l'image numérique partielle notable de la zone spécifique affichée au sein de l'image numérique de la zone spécifique affichée.

4. Produit de programme d'observation destiné à être exécuté par un système de microscope (100), comprenant les procédures de :
obtention d'une image numérique de la totalité, ou d'une partie, d'un échantillon en déplaçant une lentille d'objectif (10) et un échantillon l'un par rapport à l'autre dans la direction perpendiculaire par rapport à un axe optique ;
désignation d'au moins une zone spécifique de l'image numérique obtenue ;
mémorisation d'une image numérique de la zone spécifique désignée dans une base de données (22) d'images de zone spécifique comme une image numérique partielle notable ;
réduction d'un volume d'informations d'une image numérique partielle non notable non désignée dans l'image numérique obtenue en réduisant une résolution de cette image numérique partielle non notable ;
mémorisation de l'image numérique partielle non notable réduite dans une base de données (22) d'images de réduction ;
mémorisation d'une relation positionnelle entre l'image numérique partielle notable mémorisée dans la base de données (22) d'images de zone spécifique et l'image numérique partielle non notable mémorisée dans la base de données (22) d'images de réduction ;
affichage, à un grossissement discrétionnaire, de la totalité d'une image numérique d'un échantillon constituée par l'image numérique partielle notable mémorisée dans la base de données (22) d'images de zone spécifique et par l'image numérique partielle non notable mémorisée dans la base de données (22) d'images de réduction ;
affichage, à un grossissement discrétionnaire, de l'image numérique partielle notable mémorisée dans la base de données (22) d'images de zone spécifique ;
affichage d'au moins une zone d'image désignée dans l'image numérique entière affichée ;
affichage, dans un rectangle (55), d'une zone indiquant l'image numérique partielle notable de la zone spécifique affichée au sein de la totalité de l'image numérique affichée d'un échantillon ; et
l'affichage, dans un rectangle (61), d'une zone indiquant l'image numérique partielle notable de la zone spécifique affichée au sein de l'image numérique de la zone spécifique affichée.
